# EUROPEAN PATENT APPLICATION

(11) **EP 4 397 533 A1**
(43) Date of publication of application: **10.07.2024**
(21) Application number: 23215864.2
(22) Date of filing: 12.12.2023
(51) Int. Cl.: B60L 58/33, B60K 15/00, F02M 21/00, B61D 17/02

(54) **FUEL SUPPLY SYSTEM**

(30) Priority: 03.01.2023 US 202363436742 P; 07.11.2023 US 202318503870
(71) Applicant: Transportation IP Holdings, LLC, Norwalk, CT 06851 (US)
(72) Inventor: WRIGHT, Gregory, Longmont (US); VAIDYANATHAN, Krishnamurthy, Bangalore (IN); BHALERAO, Manoj, Bangalore (IN)
(74) Representative: Worthington, Richard Easton

(57) **Abstract**

A fuel supply system (102; 302; 1402) is provided that may include a fuel supply (106; 306) that can hold a fuel in a liquid phase, an energy producing assembly (120) that may generate energy (e.g., mechanical energy or work, and/or electric energy) by consuming the fuel from the fuel supply (106; 306), one or more operating fluid circuits (222, 224) coupled with the energy producing assembly (120) and that can manage an operating temperature of the energy producing assembly (120) by directing operating fluid into and out of the energy producing assembly (120), and one or more heat exchangers (212) that may control an operating fluid temperature of the operating fluid in the one or more operating fluid circuits (222, 224) using a reduced temperature of the fuel from the fuel supply (106; 306) prior to directing the fuel into the energy producing assembly (120).

## Description

### CROSS-REFERENCE TO RELATED APPLICATIONS

This application claims priority to U.S. Patent Application No. 18/503,870 (filed 07-November-2023), which claims priority to U.S. Provisional Application No. 63/436,742 (filed 03-January-2023). The entire contents of these applications are incorporated herein by reference.

### BACKGROUND

### Technical Field.

The subject matter described herein relates to supply systems that provide fuel to powered systems.

### Discussion of Art.

Different powered systems may be powered by consuming different types of fuel. One type of fuel that some powered systems may use are fuels that may require storage at cold temperatures, such as cryogenically cooled fuels (e.g., liquified hydrogen (LH2), liquified natural gas (LNG), and the like). Examples of powered systems may include vehicles (e.g., propulsion-generating vehicles), stationary systems, or the like.

Some of the powered systems may operate with separate supply systems connected to the powered systems. These supply systems may have a high-pressure, flexible transfer pipe to dynamically transfer fluid between the powered system and the supply system. This fluidic coupling is subject to flexing and vibrations while the powered system and supply system move relative to each other, such as when the propulsion-generating vehicle and a supply vehicle move closer together (bunching), move apart (stretching), move around curves, and the like. This relative movement can lead to potentially unsafe operating conditions if the fluidic connection leaks during coupling or operation. Such fluid transfer connections may be subject to significant safety scrutiny and rigorous safety standards by legislating agencies. Moreover, some fuels (e.g., LH2) may have a higher propensity to leak from pressurized joints used for dynamic fluidic transfer of hydrogen from the supply system to the powered system.

It may be desirable to have a system and method that differs from those that are currently available.

### BRIEF DESCRIPTION

In one example, a fuel supply system is provided that may include a fuel supply that can hold a fuel in a liquid phase, an energy producing assembly that may generate mechanical energy and/or electric energy by consuming the fuel from the fuel supply, one or more operating fluid circuits coupled with the energy producing assembly and that can manage an operating temperature of the energy producing assembly by directing operating fluid into and out of the energy producing assembly, and one or more heat exchangers that may control an operating fluid temperature of the operating fluid in the one or more operating fluid circuits using a reduced temperature of the fuel from the fuel supply prior to directing the fuel into the energy producing assembly.

A method for converting a fuel into mechanical energy and/or electric energy also is provided. One example of this method may include changing a phase of fuel held in a fuel supply in a liquid phase to a gas or vapor phase, directing the fuel in the gas or vapor phase through one or more heat exchangers, cooling an operating temperature of an operating fluid flowing in one or more operating fluid circuits using the fuel in the gas or vapor phase and the one or more heat exchangers, and generating the mechanical energy and/or electric energy using an energy producing assembly by directing the fuel in the gas or vapor phase from the one or more heat exchangers to the energy producing assembly.

Another example of a fuel supply system may include a fuel supply that can hold a cryogenic fuel in a liquid phase, a blower that can change the fuel from the liquid phase to a gas or vapor phase in the fuel supply by directing ambient air through one or more conduits extending into the fuel supply, an energy producing assembly that may generate mechanical energy and/or electric energy by consuming the fuel from the fuel supply while the fuel is in the gas or vapor phase, one or more operating fluid circuits coupled with the energy producing assembly that can manage an operating temperature of the energy producing assembly by directing operating fluid into and out of the energy producing assembly, and one or more heat exchangers that may control an operating fluid temperature of the operating fluid in the one or more operating fluid circuits using a reduced temperature of the fuel in the gas or vapor phase prior to directing the fuel into the energy producing assembly.

### BRIEF DESCRIPTION OF THE DRAWINGS

The subject matter may be understood from reading the following description of non-limiting embodiments, with reference to the attached drawings, wherein below:
Figure 1 illustrates one example of a powered system having a fuel supply system;
Figure 2 illustrates the fuel supply system shown in Figure 1;
Figure 3 illustrates another example of a fuel supply system with another powered system;
Figure 4 illustrates another example of a fuel supply system;
Figure 5 illustrates another example of a fuel supply system onboard the powered systems;
Figure 6 illustrates the fuel supply system shown in Figure 5;
Figure 7 illustrates another example of a fuel supply system onboard the powered systems;
Figure 8 illustrates another example of a fuel supply system;
Figure 9 illustrates another example of a fuel supply system;
Figure 10 illustrates another example of a fuel supply system;
Figure 11 illustrates another example of a fuel supply system;
Figure 12 illustrates another example of a fuel supply system;
Figure 13 illustrates another example of a fuel supply system;
Figure 14 illustrates another example of a fuel supply system; and
Figure 15 illustrates a flowchart of one example of a method for operating or controlling a fuel supply system.

### DETAILED DESCRIPTION

Embodiments of the subject matter described herein relate to fuel supply systems that can more safely and reliably transfer fuel to fuel-consuming components of a powered system, such as a mobile propulsion-generating vehicle or a stationary system. The fuel-consuming components may include an engine, a fuel cell, a gas turbine, etc. Examples of fuel supply systems may avoid dynamic fluidic transfer of cooled fuels to a powered system from a supply system. The systems described herein may safely store, transport, and supply cryogenically cooled fuels or other fuels that are maintained at temperatures below the ambient temperature or below room temperature. One or more examples of these systems may overcome some known packaging challenges and address safety challenges, while also recovering at least some of previously wasted thermal energy (e.g., heat or cooling).

As one example, the system may be disposed onboard a hybrid propulsion-generating vehicle having energy storage devices (e.g., batteries, battery cells, etc.) and electrochemical cells (e.g., fuel cells), with an onboard fuel storage tank having conditioning devices (e.g., an evaporator) for operation of the electrochemical cell(s). The risk of a fuel leak may be reduced or completely avoided by sizing the onboard storage tank to fulfill an intended or scheduled mission or trip of the propulsion-generating vehicle, and subsequently filling the onboard storage tank from an off-board fuel reservoir (e.g., once the propulsion-generating vehicle has stopped).

In another example, the system described above may include the storage tank onboard a supply vehicle that moves along with the propulsion-generating vehicle. This can allow for more fuel to be carried by the supply vehicle and accessible to the propulsion-generating vehicle during travel. The supply vehicle may be able to carry much more fuel than the propulsion-generating vehicle alone, and not have a fluidic coupling with the propulsion-generating vehicle (thereby reducing or eliminating the risk of leaks in the coupling). The propulsion-generating vehicle may still include a local storage tank that is replenished with fuel from the supply vehicle (e.g., while the propulsion-generating vehicle is stationary) so that the propulsion-generating vehicle can operate without a continuous supply of the fuel from the supply vehicle.

In another example, multiple propulsion-generating vehicles may be connected with the supply vehicle described above. This can allow for more fuel to be carried when compared with the propulsion-generating vehicle only having a tank and can provide increased propulsion or tractive effort due to the presence of multiple propulsion-generating vehicles.

While one or more embodiments are described in connection with a rail vehicle system, not all embodiments are limited to rail vehicle systems. Unless expressly disclaimed or stated otherwise, the subject matter described herein extends to other types of vehicle systems, such as automobiles, trucks (with or without trailers), buses, marine vessels, aircraft, mining vehicles, agricultural vehicles, or other off-highway vehicles. The vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together (e.g., as a convoy).

Optionally, the systems described herein may not be disposed onboard mobile systems but may be used in connection with or in stationary systems, such as gensets.

With regard to the fuel, the fuel may be a single fuel type in one embodiment and in other embodiments the fuel may be a mixture of a plurality of different fuels. In one example of a fuel mixture, a first fuel may be liquid, and a second fuel may be gaseous. A suitable liquid fuel may be diesel (regular, biodiesel, HDRD, and the like), gasoline, kerosene, dimethyl ether (DME), alcohol, and the like. A suitable gaseous fuel may be natural gas (methane) or a short chain hydrocarbon, hydrogen, ammonia, and the like. In one embodiment, fuel may be inclusive of stored energy as used herein. In that perspective, a battery state of charge, or a source of compressed gas, a flywheel, fuel cell, and other types of non-traditional fuel sources may be included.

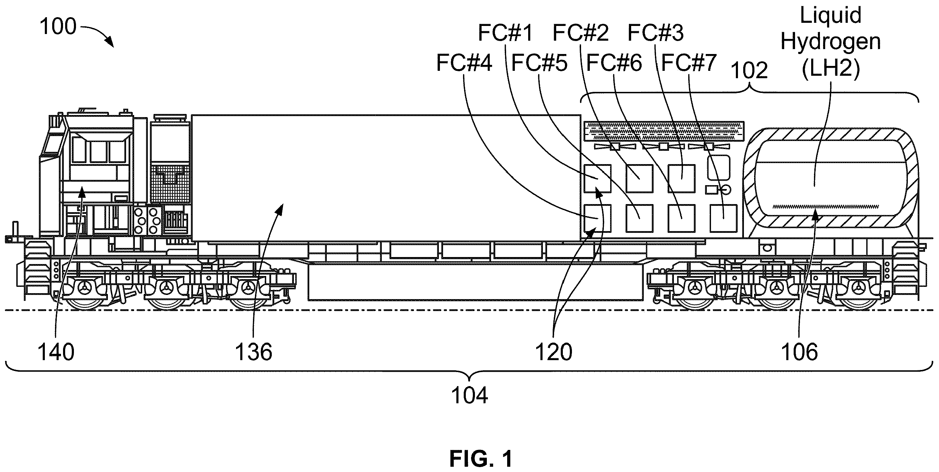

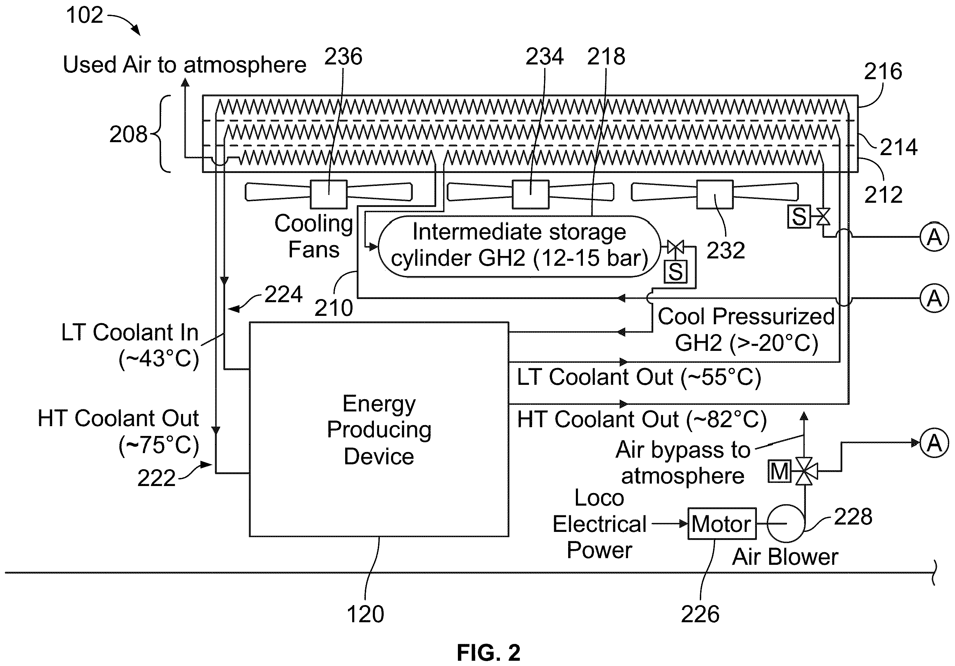

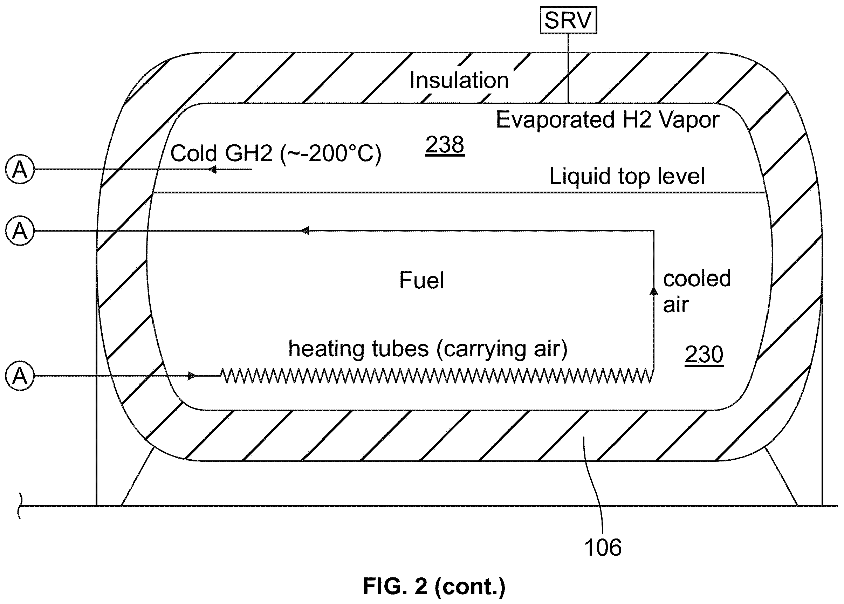

Figure 1 illustrates one example of a powered system 100 having a fuel supply system 102. Figure 2 illustrates the fuel supply system shown in Figure 1. The fuel supply system described in connection with Figures 1 and 2 may include an onboard cryogenic liquid fuel tank, with conditioning equipment such as evaporators, pumps, safety equipment, and the like. Cryogenic liquid fuel (e.g., hydrogen) may be vaporized using air inside the tank and transferred to a powertrain of the powered system at a designated pressure. In some known vehicles, the liquid (e.g., cryogenic) fuel may not be carried on the vehicle itself due to packaging constraints. This can limit operation of the vehicle as another vehicle (e.g., a non-propulsion-generating vehicle, such as a tender) may be needed to carry the fuel. This can reduce the haulage payload of the powered system. Additionally, the fluidic transfer of fuel across the coupler between the vehicles may be challenging from a safety point of view and an operational point of view, as the system may need to ensure that personnel are trained to check and make sure that the fluidic coupling is leak-tight.

In contrast, the fuel supply system shown in Figures 1 and 2 outputs gas or vapor phase fuel (e.g., H2) from the tank, instead of this being a byproduct of operation of the system, as the loads of the powered system may operate using the gaseous fuel. The need for an additional vehicle or tender also may be eliminated, thereby reducing or eliminating the challenges and safety risks of a fluidic transfer between vehicles.

The fuel supply system may be disposed onboard the powered system, as shown in Figures 1 and 2. In the illustrated example, the powered system is a vehicle system formed from at least one propulsion-generating vehicle 104. Optionally, the vehicle system may include one or more additional propulsion-generating vehicles and/or one or more non-propulsion-generating vehicles (e.g., rail cars, trailers, or the like). The fuel supply system is described for use in connection with a vehicle system, but optionally can be used to supply fuel to a stationary system, such as a power generating system. The term powered system can be used to refer to either a mobile vehicle system or a stationary power generating system.

The fuel supply system may be disposed onboard a single vehicle (e.g., a single propulsion-generating vehicle), as shown in Figure 1. The fuel supply system may include a fuel source 106, such as a tank, that holds a supply of a fuel. This fuel may be a cold or cryogenic fuel, such as LH2, LNG, or another fuel, and the fuel optionally may be held at or within a designated temperature or temperature range (e.g., reduced temperatures or temperatures below ambient temperatures). The fuel may be held in the fuel source at temperatures that keep all or predominantly all the fuel in a liquid phase or state. Optionally, the fuel may include ammonia, alcohol, or the like.

The fuel source may be fluidly coupled with a heat exchanger assembly 208 by one or more conduits 210 (e.g., hoses, pipes, tubes, or the like). The heat exchanger assembly may include one or more heat exchangers, such as a first or lower heat exchanger 212, a second or middle heat exchanger 214, and a third or upper heat exchanger 216. Optionally, the first or lower heat exchanger may be referred to as a fuel heat exchanger as this heat exchanger transfers the cold temperatures from the fuel to the other heat exchangers. The second or middle heat exchanger may be referred to as a low temperature cooling circuit heat exchanger, as this heat exchanger cools an operating fluid (e.g., a coolant or other fluid) flowing through a low temperature cooling circuit, as described herein. The third or upper heat exchanger may be referred to as a high temperature cooling circuit heat exchanger, as this heat exchanger cools an operating fluid flowing through a high temperature cooling circuit, as described herein.

Alternatively, fewer heat exchangers or more than three heat exchangers may be provided. The heat exchangers may include additional conduits or section of conduits that are fluidly coupled with the fuel source, as shown and described herein. The portions of the conduits inside the heat exchangers may be in the shape of coils or another shape.

The first or lower heat exchanger optionally may be fluidly coupled with an intermediate storage tank 218 with the first or lower heat exchanger disposed between the fuel source and intermediate tank and the intermediate tank, and first heat exchanger located downstream of the fuel source along a direction of flow of the fuel from the fuel source. The different heat exchangers can represent different zones of a thermal management system formed by the different heat exchangers.

The intermediate tank also is fluidly coupled with an input of an energy converter or an energy producing assembly 120 ("Fuel Cell Modules" in Figure 2) that receives the fuel from the fuel source via the intermediate tank to generate mechanical energy and/or electric energy. Optionally, the intermediate tank is not used and the input of the energy producing assembly may be coupled with an output of the first heat exchanger. In the illustrated example, the energy producing assembly may represent several fuel cells or fuel cell modules, but alternatively may be another electrochemical cell or other device that consumes the fuel from the fuel source to generate electric energy.

The energy producing assembly can receive the fuel and consume at least part of the fuel to generate the mechanical energy and/or electric energy. This energy can be used to power loads of the powered system and/or be stored in energy storage devices 136, such as batteries, battery cells, capacitors, super capacitors, etc. With respect to vehicles, the energy can power motors, actuators, auxiliary systems, blowers or fans, generators, alternators, or the like.

The supply system and/or the energy producing assembly may include a reformer device. This reformer device or reformer can receive output or exhaust from the energy producing assembly, can change or reform the exhaust into one or more constituents of the fuel consumed by the energy producing assembly, and direct the reformed constituents back to the fuel source, the intermediate tank, and/or back into the energy producing assembly.

The energy producing assembly may include separate operating fluid circuits through which operating fluids flow to manage temperatures within the energy producing assembly. These operating fluid circuits include a higher temperature (HT) operating fluid circuit 222 and a lower temperature (LT) operating fluid circuit 224, with the operating fluid flowing in the HT operating fluid circuit being at a warmer temperature than the operating fluid flowing in the LT operating fluid circuit.

The operating fluid circuits can include conduits through which the operating fluids flow. The HT operating fluid circuit directs operating fluid to flow from out of the energy producing assembly, through the upper heat exchanger, and back into the energy producing assembly (and may include manifolds, junctions, splits, and the like, to direct the operating fluid into several of the fuel cell modules). The LT operating fluid circuit directs operating fluid to flow from out of the energy producing assembly, through the middle heat exchanger, and back into the energy producing assembly (and may include manifolds, junctions, splits, and the like, to direct the operating fluid into several of the fuel cell modules).

One of the loads of the powered system may include an actuator 226 ("Motor" in Figure 2) that drives a blower or fan 228. This actuator controls the blower or fan to move air through conduits that extend into the fuel source. A cryogenically cooled liquid phase 230 of the fuel in the fuel source or tank may cool the air moving through the conduits in the fuel source or tank. For example, the air may be at or near an ambient temperature, and the liquid fuel may be held at much cooler temperatures (e.g., negative two hundred degrees Celsius or cooler, or another temperature below ambient). The air is cooled during travel of the air in the portion of the conduit that is submerged in the liquid fuel in the fuel source or tank. The conduit directs the now cooled air out of the fuel source or tank and through a portion of the lower heat exchanger, as shown in Figure 2. The conduit then directs the air out of the powered system (e.g., into the ambient atmosphere outside of the powered system).

In this way, the blower or fan may provide air as a heating medium for converting liquid phase fuel to a limited amount of pressurized gas or vapor phase fuel as needed to supply the energy producing assembly. While other systems may use a cryogenic pump submerged in the liquid phase fuel, this pump can be expensive to implement and may pose safety challenges if electrical power leaks into the liquid fuel. Conversely, usage of air as the heating medium may eliminate the need of a cryogenic pump. An alternative to circulating air into the liquid fuel tank could involve a heated fluid (e.g., heated water and glycol), but this fluid may freeze when circulation is stopped (e.g., when gas phase fuel is not required), and may impair further circulation and heating. This may be avoided by using air as a heating medium, which may only liquify when circulation is stopped but would be eliminated when fresh air is circulated.

Another load of the powered system may be another fan or blower 232 that moves or blows ambient air across the conduit carrying the cooled air from the fuel source or tank across portions of the conduits in the middle and upper heat exchangers to cool the HT and LT operating fluids flowing in the HT and LT operating fluid circuits. One or more additional fans or blowers 234, 236 also move or blow ambient air across the portion of the conduits in the lower heat exchanger that carries a gas or vapor phase 238 of the fuel in the fuel source or tank. For example, part of the fuel in the fuel source or tank may be in the liquid phase (through which the conduit carrying the air from the fan or blower flows) and another part of the fuel in the fuel source or tank may be in the gas or vapor phase.

The gas or vapor phase fuel flows through conduits into the lower heat exchanger. The fans or blowers 232, 234 may blow ambient air across these conduits in the lower heat exchanger to cool the air and force the air across or around the conduits in the middle and upper heat exchangers. This can cause the HT and LT operating fluids flowing in the conduits in the middle and upper heat exchangers to be cooled. For example, the gas or vapor phase fuel exiting the supply tank 106 may be used to pre-cool the air or other operating fluid that is circulated to the middle and upper heat exchangers that cool the LT and HT operating fluid circuits.

The liquid fuel may cool the ambient air flowing in the fuel source or tank. This can vaporize or change some of the liquid fuel to the gas or vapor phase and force this gas or vapor phase out of the fuel source or tank into the conduit extending through the lower heat exchanger. This gas or vapor phase fuel then flows into the intermediate tank, where the gas or vapor phase may be held until the pressure of the gas or vapor phase is at or above a designated pressure. The energy producing assembly may require supply of the gas or vapor phase fuel to be maintained at or above the designated pressure to generate the mechanical energy and/or electric energy. The intermediate tank can be used to ensure that the gas/vapor phase fuel be continually or repeatedly provided to the energy producing assembly at pressures that are at least as great as the designated pressure. For example, the intermediate tank can be filled to the designated pressure or greater before the fuel is directed from the tank to the energy producing assembly (via control of valves or the like).

The intermediate tank may operate as a buffer to damp out variations in pressure of the gas or vapor phase fuel coming from the supply or tank 106. This also can improve control of pressure inside the supply or tank 106 by avoiding or reducing the need for a rapid heating of the liquid fuel in the event of a sudden increase in demand for gas or vapor phase from the energy producing assembly. This also can be useful in low ambient conditions where heating of the gas or vapor phase fuel from the supply or tank may take longer.

The fuel is directed into the energy producing assembly from the intermediate tank (or from the fuel source or tank in an embodiment that does not include the intermediate tank), where the fuel is at least partially consumed to generate energy. The operating fluid in the LT operating fluid circuit may flow into the energy producing assembly to remove heat from the energy producing assembly, then out of the energy producing assembly and through part of the intermediate heat exchanger where the air blown by the fans across the lower heat exchanger cool the operating fluid in the LT operating fluid circuit before this operating fluid returns into the energy producing assembly, as shown in Figure 2. The operating fluid in the HT operating fluid circuit may flow into the energy producing assembly to remove heat from the energy producing assembly, then out of the energy producing assembly and through part of the intermediate heat exchanger where the air blown by the fans across the lower heat exchanger cool the operating fluid in the HT operating fluid circuit before this operating fluid returns into the energy producing assembly, as shown in Figure 2.

In one example, the supply system may include a controller 140 that can represent hardware circuitry including and/or connected with one or more processors (e.g., field programmable gate arrays, integrated circuits, microprocessors, or the like) that perform the operations described in connection with the controller. The controller can send signals to control operation of valves to control the pressure within the intermediate tank, the fuel source or tank, and the like. For example, the controller can control the pressure and/or amount of the vaporized fuel in the intermediate tank based on a measured, predicted, and/or calculated change in the energy demand of the loads of the powered system. Responsive to increased energy demand from the loads, the energy producing assembly or energy converter assembly may demand more fuel to generate more energy to meet the increased demand. This increased fuel demand may be met by increasing the pressure of the fuel in the intermediate tank. This increased pressure can be controlled by closing valves that prevent the flow of fuel from the intermediate tank to the energy producing assembly and/or controlling the valves to reduce the rate at which the fuel flows out of the intermediate tank. Optionally, the increase in pressure can be controlled by opening valves that allow the flow of fuel from the fuel source or tank to the intermediate tank and/or controlling the valves to increase the rate at which the fuel flows out of the fuel source or tank.

Conversely, responsive to decreased energy demand from the loads, the energy producing assembly or energy converter assembly may demand less fuel to less more energy to meet the reduced demand. This decreased fuel demand may be met by decreasing the pressure of the fuel in the intermediate tank and/or decreasing the rate at which the fuel flows from the intermediate tank to the energy producing assembly.

Similarly, the controller can control the pressure of the fuel in the intermediate tank based at least in part on an anticipated upcoming change in a pressure of the fuel source or tank along a route on which the powered system is moving. For example, the demand or predicted demand for energy from the energy producing assembly may increase during segments of a route that the vehicle system is moving that are inclined, that are heading into a headwind, that involve faster speeds, that involve pulling or pushing more weight, and the like. The controller can examine or receive input indicating various characteristics of the upcoming route, the cargo being carried, and the like, and determine that an upcoming portion of the route(s) may require more energy to travel over or through. As a result, the controller can increase the fuel pressure in the intermediate tank.

Conversely, the demand or predicted demand for energy from the energy producing assembly may decrease during segments of a route that the vehicle system is moving that are flatter or declined, that are heading with a tailwind, that involve slower speeds, that involve pulling or pushing less weight, and the like. The controller can examine or receive input indicating various characteristics of the upcoming route, the cargo being carried, and the like, and determine that an upcoming portion of the route(s) may require less energy to travel over or through. As a result, the controller can decrease or not increase the fuel pressure in the intermediate tank.

The controller can control the speeds at which the fans or blowers operate. The speeds can be varied based on the amount of thermal energy to be transferred out of or absorbed by the fuel, air, and/or operating fluids flowing in the conduits in the heat exchangers. For example, the controller can increase the fan or blower speeds to cool the fuel, air, and/or operating fluids more rapidly and can reduce the fan or blower speeds to cool the fuel, air, and/or operating fluids more slowly.

The supply system shown in Figures 1 and 2 can provide fuel to the energy producing assembly, and the energy producing assembly can create mechanical energy and/or electric energy for powering loads of the powered system and/or for charging energy storage devices of the powered system, during movement of the powered system. But the size of the fuel source or tank and the amount of fuel carried by the fuel supply system may be limited due to size constraints of the powered system. For example, the powered system may also carry other components, an operator cab, etc., that consume space in or on the powered system.

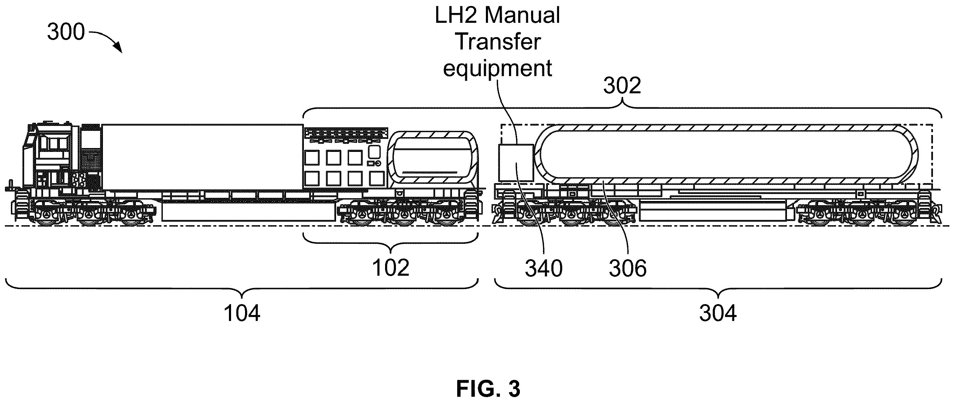

Figure 3 illustrates another example of a fuel supply system 302 with another powered system 300. The fuel supply system may include the fuel supply system 102 shown in Figures 1 and 2, but also may include an additional fuel source or tank 306. For example, the fuel supply system 302 may include the fuel supply system 102 onboard the vehicle or powered system 104 and also include an additional fuel source or tank onboard another vehicle or powered system 304. This additional vehicle may move with the vehicle carrying the fuel supply system 102. The additional vehicle also may have one or more components 340 that transfer the fuel stored in the additional fuel source or tank to the fuel source or tank of the fuel supply system 102.

For example, the additional fuel source or tank may carry cryogenically cooled liquid fuel that is pumped out of the additional fuel source or tank 306 to the fuel source or tank 106 when needed by one or more pumps, conduits, etc. The powered system 104, 304 may be powered with mechanical energy and/or electric energy generated by the energy producing assembly that consumes fuel from the primary fuel source or tank 106. Once the level or amount of fuel in the primary fuel source or tank becomes low (e.g., reaches or falls below a designated refill threshold), the components onboard the additional powered system 304 may pump additional fuel from the additional fuel source or tank 306 into the primary fuel source or tank 106. This may occur when or while the powered systems are stationary, for example. The refilled primary fuel source or tank can then continue to supply fuel to the energy producing assembly, as described above. This can allow for the powered systems to operate for longer and/or travel longer distances when compared with the fuel supply system shown in Figures 1 and 2.

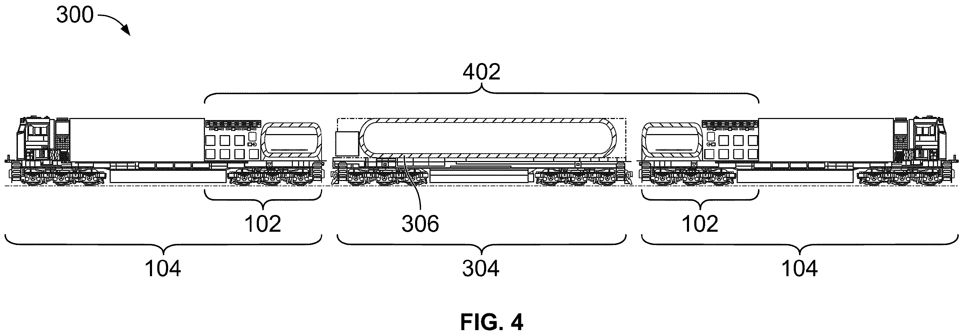

Figure 4 illustrates another example of a fuel supply system 402. This fuel supply system may include two or more of the fuel supply systems 102 shown in Figures 1 and 2 and at least one of the additional fuel source or tank 306 carried on another vehicle. The vehicles may be powered with mechanical energy and/or electric energy generated by the energy producing assemblies that consume fuel from the primary fuel sources or tanks onboard the same vehicles as the energy producing assemblies. Once the level or amount of fuel in either of the primary fuel sources or tanks becomes low (e.g., reaches or falls below a designated refill threshold), the components onboard the additional powered system may pump additional fuel from the additional fuel source or tank into either or both the primary fuel sources and tanks. This may occur when or while the powered systems are stationary, for example. The refilled primary fuel sources or tanks can then continue to supply fuel to the energy producing assembly, as described above. This can allow for the powered systems to operate for longer, travel longer distances, and/or generate more power or tractive effort when compared with the fuel supply systems shown in Figures 1 through 3.

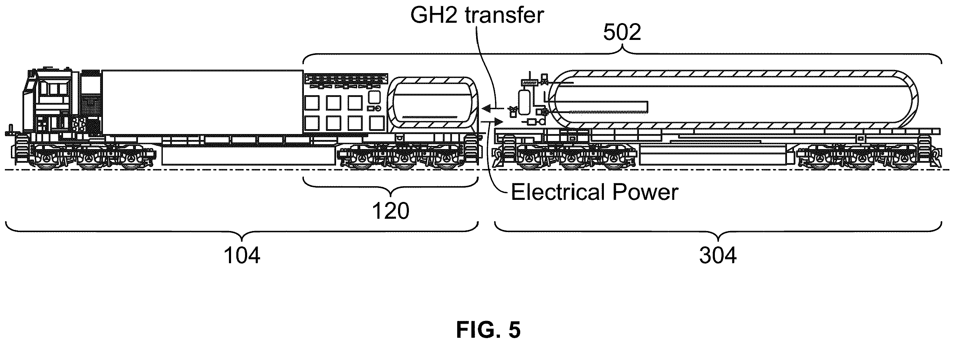

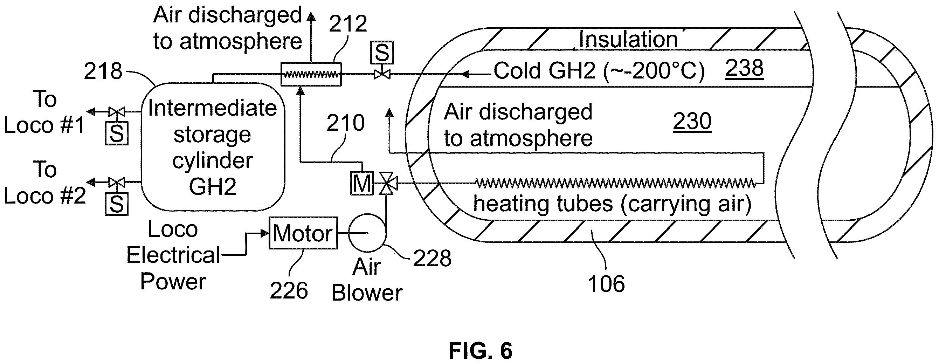

Figure 5 illustrates another example of a fuel supply system 502 onboard the powered systems 104, 304. Figure 6 illustrates the fuel supply system shown in Figure 5. This fuel supply system may be similar to the fuel supply system shown in Figure 3, but with several of the components of the fuel supply system disposed onboard the other powered system 304. For example, the actuator 226, the fan or blower 228, the lower heat exchanger 212, and the intermediate tank 218 may be disposed onboard the powered system 304 instead of the powered system 104. This can allow for ambient air to be directed into the fuel supply tank 106 and then out of the fuel supply tank and directed out of the fuel supply system as exhaust to the ambient environment. Passage of this air through the conduits 210 within the fuel supply tank can warm some of the liquid fuel and convert the fuel into a gas or vapor form. This gas or vapor phase fuel may be directed out of the fuel supply tank via another conduit and into the lower or first heat exchanger onboard the powered system 304. The gas or vapor phase fuel may be further warmed by passage of additional ambient air through the heat exchanger, as shown in Figure 6. This additional air also may be directed out of the fuel supply system as exhaust to the ambient environment. The gas or vapor phase fuel may be directed out of the lower heat exchanger into the intermediate storage tank onboard the powered system 304. One or more additional conduits may extend from the intermediate storage tanks to the energy producing assemblies onboard one or more powered systems 104. While two conduits are shown to direct the gas or vapor phase fuel to two of the powered systems, optionally only a single conduit may be used, or more than two conduits may be used (to direct the gas or vapor phase fuel to only one powered system 104 or to more than two powered systems 104).

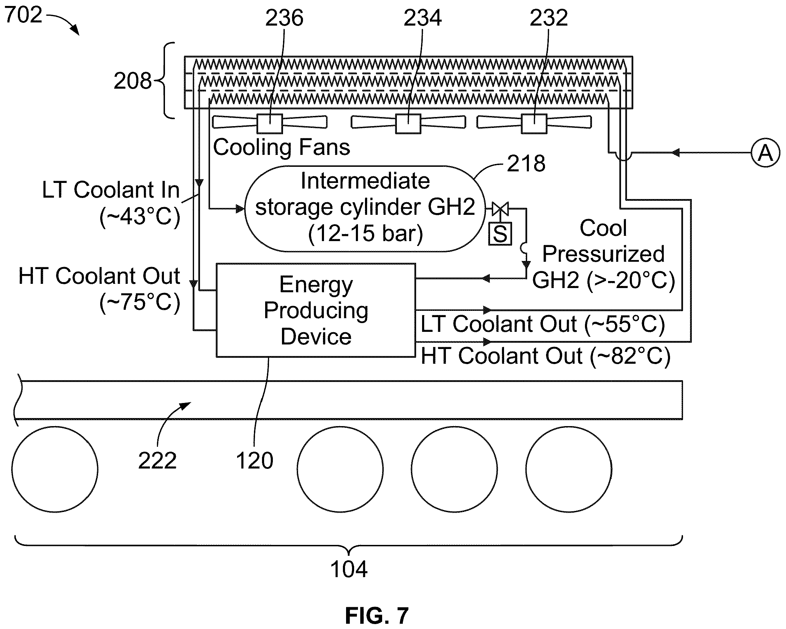

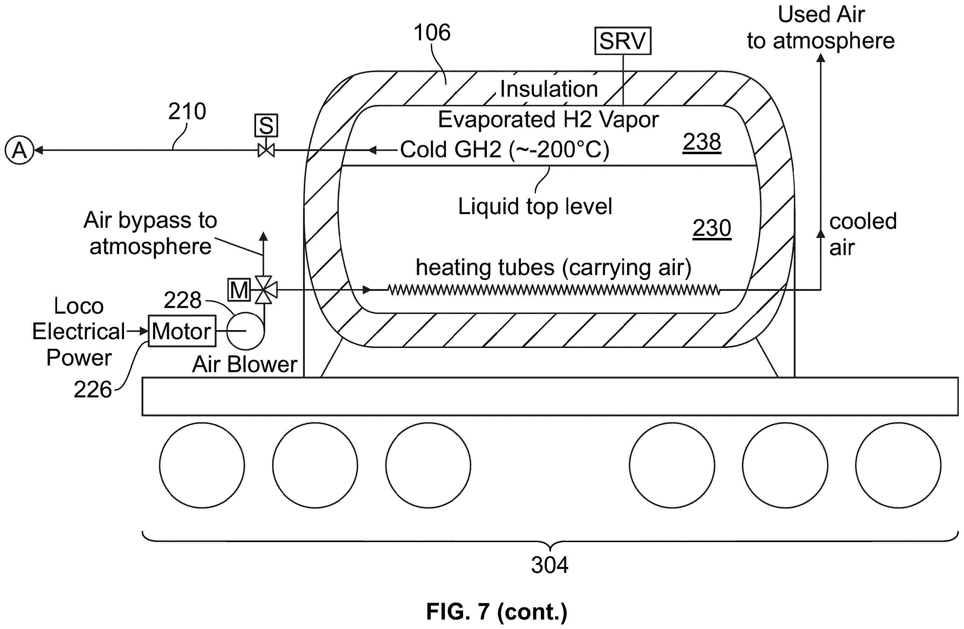

Figure 7 illustrates another example of a fuel supply system 702 onboard the powered systems 104, 304. This fuel supply system may be similar to the fuel supply systems shown and described herein, but with several of the components of the fuel supply system disposed onboard different powered systems. For example, the actuator 226, the fan or blower 228, and the tank 106 may be disposed onboard the powered system 304 while the remaining components disposed onboard the powered system 104. This can allow for ambient air to be directed into the fuel supply tank 106 to convert some vapor or gas phase fuel from the liquid phase fuel. This vapor or gas phase fuel is directed out of the tank and to the energy producing assembly via conduits. As shown, the energy producing assembly, the intermediate storage tank, the heat exchangers, and the additional fans or blowers may be onboard the powered system 104.

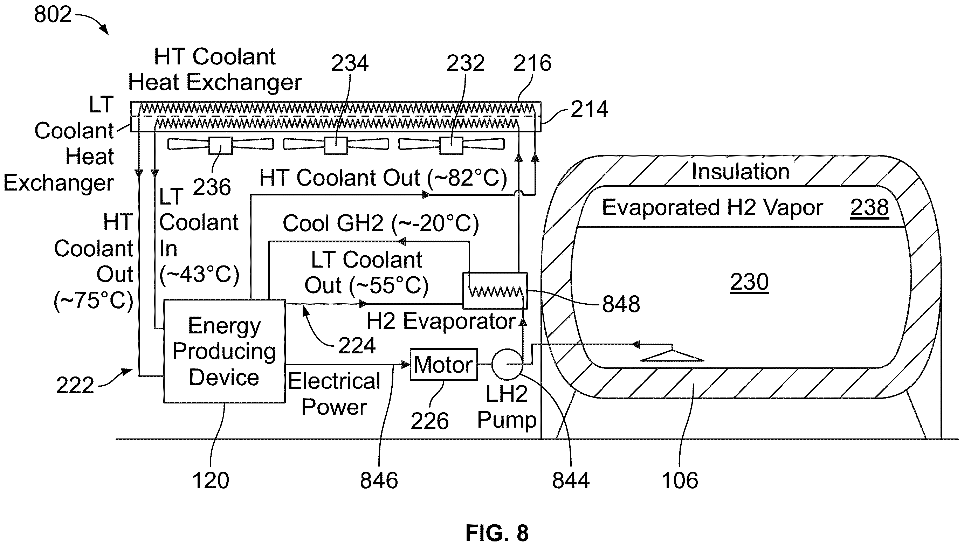

Figure 8 illustrates another example of a fuel supply system 802. This supply system may be disposed onboard a single powered system or split up and disposed onboard multiple powered systems. The supply system may include the actuator connected with a liquid pump 844 disposed in the fuel supply or tank 106. The actuator may operate the pump to pull and force liquid phase fuel in the fuel supply tank via conduits that lead into and out of the fuel supply tank. The liquid phase fuel may be directed into an evaporator device 848 by the conduits extending into and through the evaporator device (e.g., as coils extending through the evaporator device). The LT operating fluid circuit may flow through the evaporator device and may warm up the liquid fuel and change the phase of the liquid fuel to a gas or vapor fuel. The gas or vapor phase fuel may then flow into the energy producing assembly to generate mechanical energy and/or electric energy, as described above. The LT operating fluid circuit may exit out of the evaporator device, into and through the middle or second heat exchanger, and return to the energy producing assembly, as described above. The HT operating fluid circuit may exit from the energy producing assembly, extend through the upper heat exchanger, and return to the energy producing assembly, also as described above. The fans or blowers may force air across, over, etc. the middle heat exchanger and the upper heat exchanger to transfer thermal energy between the heat exchangers, as described above. One or more conductive pathways 846 may extend from the energy producing assembly and one or more loads to power the loads, such as the energy storage devices, the actuator, the pump, and the like.

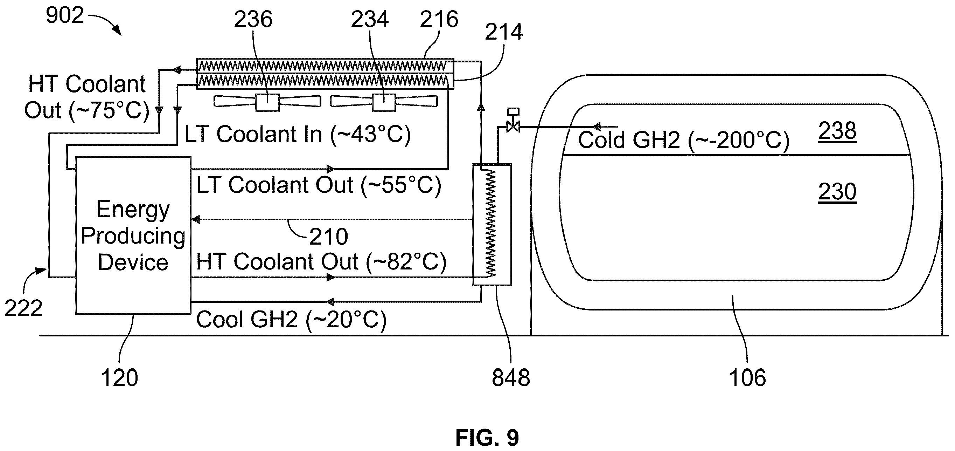

Figure 9 illustrates another example of a fuel supply system 902. This supply system may be disposed onboard a single powered system or split up and disposed onboard multiple powered systems. The supply system may not include or use the actuator connected with the fan or blower, or with the liquid pump. Instead, the HT operating fluid circuit may pass through the evaporator device to which the conduits connect the fuel supply or tank with the evaporator device. Gas or vapor phase fuel may be drawn to flow out of the supply or tank into the evaporator device, and then directed into the energy producing assembly by the conduits.

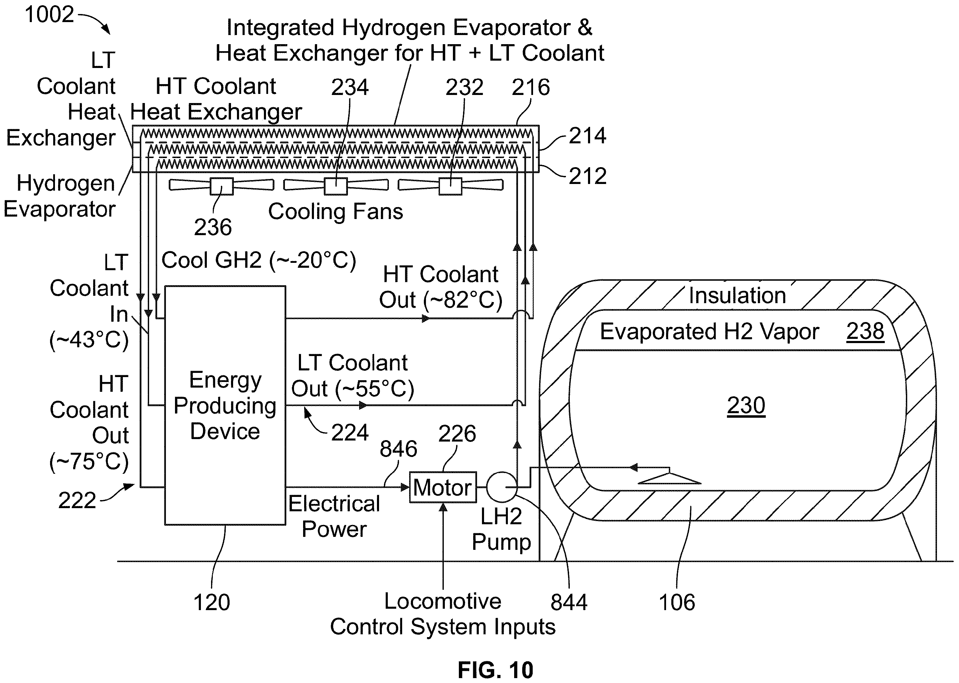

Figure 10 illustrates another example of a fuel supply system 1002. This supply system may be disposed onboard a single powered system or split up and disposed onboard multiple powered systems. The supply system may be similar to the fuel supply system shown in Figure 8 but may not include the evaporator device. Instead, liquid fuel may be directed through the lower heat exchanger and heated by the ambient air being blown across or through the lower heat exchanger to change the liquid fuel to gas or vapor fuel. The cooled air may then flow across or through the middle and upper heat exchangers to cool the operating fluids flowing in the LT and HT operating fluid circuits. The gas or vapor fuel may exit out of the lower heat exchanger and be directed into the energy producing assembly, as shown in Figure 10. Using the liquid fuel to cool the HT and LT circuits can reduce the needed size for the heat exchangers (relative to using another operating fluid).

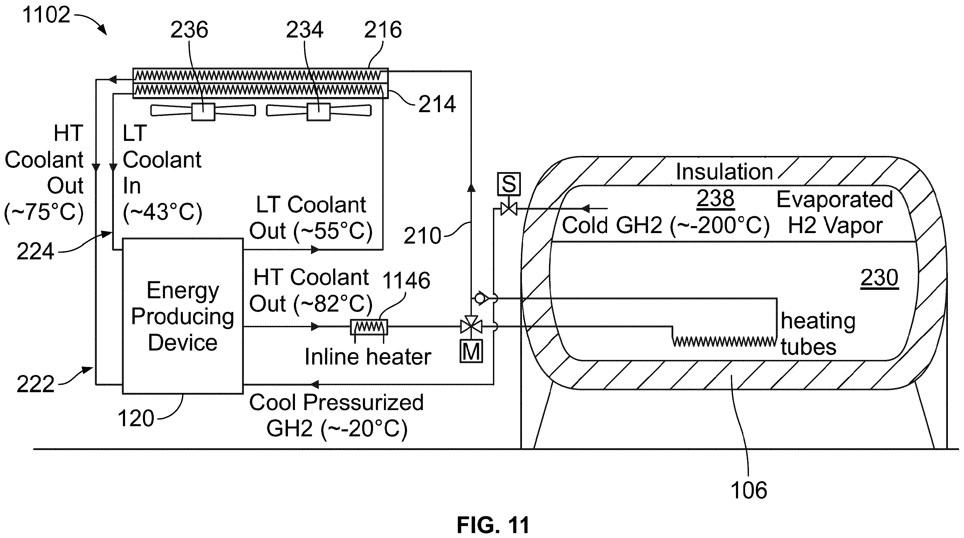

Figure 11 illustrates another example of a fuel supply system 1102. This supply system may be disposed onboard a single powered system or split up and disposed onboard multiple powered systems. The supply system may be similar to the other fuel supply systems but may not include the fuel heat exchanger. The fuel supply system shown in Figure 11 may include a heating device 1146 disposed inline with the HT operating fluid circuit. This heating device may include resistive elements or other components that can heat fluids (liquids and/or gases) flowing through the heating device in the HT operating fluid circuit. The operating fluid in the HT operating fluid circuit may exit the energy producing assembly and be heated by the heating device. The conduits of the HT operating fluid circuit may extend into the supply tank, through the liquid phase fuel in the supply tank, and return to the HT heat exchanger (e.g., the third or upper heat exchanger), as shown in Figure 11.

In operation, the heating device heats the operating fluid in the HT circuit prior to passing this operating fluid through the liquid fuel in the supply tank. This can cause the liquid fuel to change phases to the gas or vapor phase. The gas or vapor phase fuel can exit out of the supply tank and be supplied directly to the energy producing assembly (or to an intermediate tank, as described above). The LT circuit can operate by directing the operating fluid from the energy producing assembly, through the LT heat exchanger, and back through the energy producing assembly. The HT circuit can operate by directing the operating fluid from the energy producing assembly, through the supply tank, through the HT heat exchanger, and back into the energy producing assembly. This supply system may avoid use of the liquid fuel pump, which can introduce safety risks due to potential exposure of the fuel to mechanical energy and/or electric energy. Additionally, the absence of the liquid fuel pump can reduce the parasitic load or electric demand of the pump.

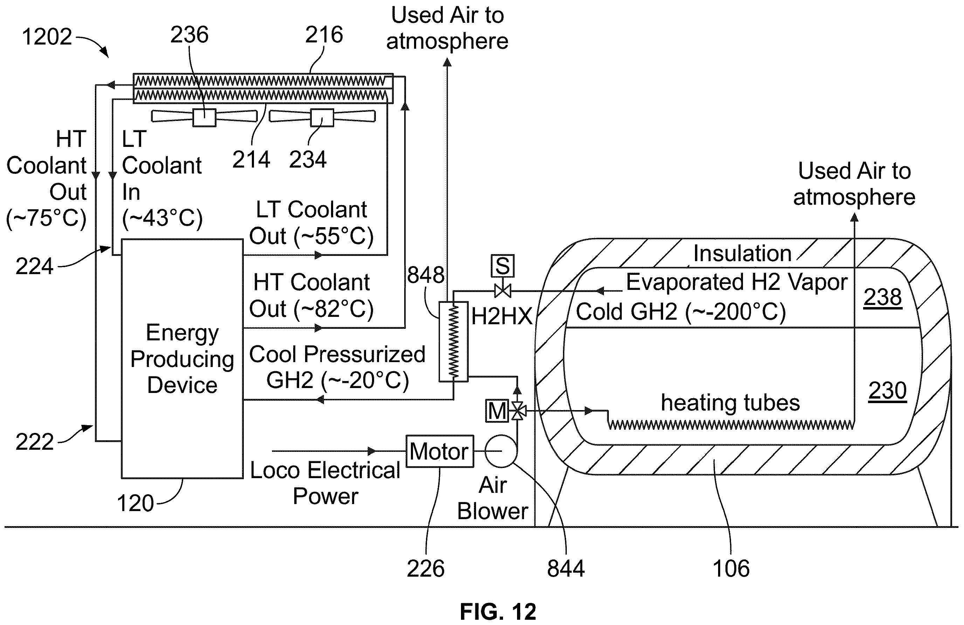

Figure 12 illustrates another example of a fuel supply system 1202. This supply system may include components of the other fuel supply systems shown and described herein. For example, the supply system shown in Figure 12 can include the supply tank, the energy producing assembly, the actuator and coupled fan or blower, the LT and HT operating fluid circuits, the fans or blowers of the heat exchangers, the LT and HT heat exchangers, and the evaporator device. In operation, the actuator operates the coupled fan or blower to push ambient air through conduits that extend into and out of the supply tank. The heat from this air can convert some of the liquid fuel into gas or vapor fuel. The gas or vapor fuel is directed out of the supply tank through another conduit that directs the gas or vapor fuel to the evaporator device, and then into the energy producing assembly. The ambient air from the fan or blower also is directed into the evaporator device to further heat the gas or vapor phase fuel. The ambient air is directed out of the supply system into the ambient atmosphere as exhaust after passing through the evaporator and the fuel supply tank.

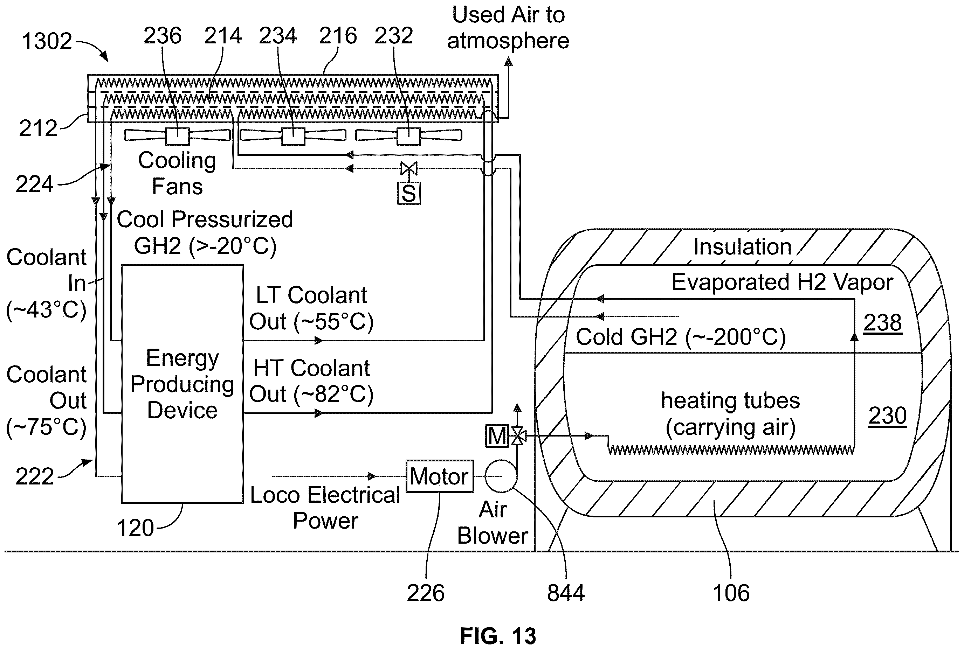

Figure 13 illustrates another example of a fuel supply system 1302. This supply system may include components of the other fuel supply systems shown and described herein. For example, the supply system shown in Figure 13 can include the supply tank, the energy producing assembly, the actuator and coupled fan or blower, the heat exchanger assembly having the fuel, LT, HT heat exchangers, the LT and HT operating fluid circuits, and the fans or blowers of the heat exchangers. In operation, the actuator operates the coupled fan or blower to push ambient air through conduits that extend into and out of the supply tank, and then through the fuel, first, or lower heat exchanger before being exhausted to the ambient environment. The heat from this air in the supply tank can convert some of the liquid fuel into gas or vapor fuel. The air may be cooled by the thermal energy exchange occurring in the supply tank.

The fans blowing air across the first or lower heat exchanger may transfer some of the cooler temperatures from this fuel-cooled air to cool the operating fluids in the LT and HT operating fluid circuits as the operating fluids pass through the HT and LT heat exchangers. Using the air exiting from the fuel supply tank to cool the first, lower, or fuel heat exchanger can improve the logarithmic mean temperature difference (LMTD) of this heat exchanger and may allow for a smaller heat exchanger to be used. The gas or vapor fuel is directed out of the supply tank through another conduit that directs the gas or vapor fuel through part of the first, lower, or fuel heat exchanger before being directed into the energy producing assembly. The cool fuel passing through the first, lower, or fuel heat exchanger may be used to cool the operating fluids in the HT and LT heat exchangers by blowing air over, across, or through the fuel heat exchanger to the HT and LT heat exchangers. This also can help reduce the size of the HT and LT heat exchangers, similar to passage of the cooled air through the first, lower, or fuel heat exchanger.

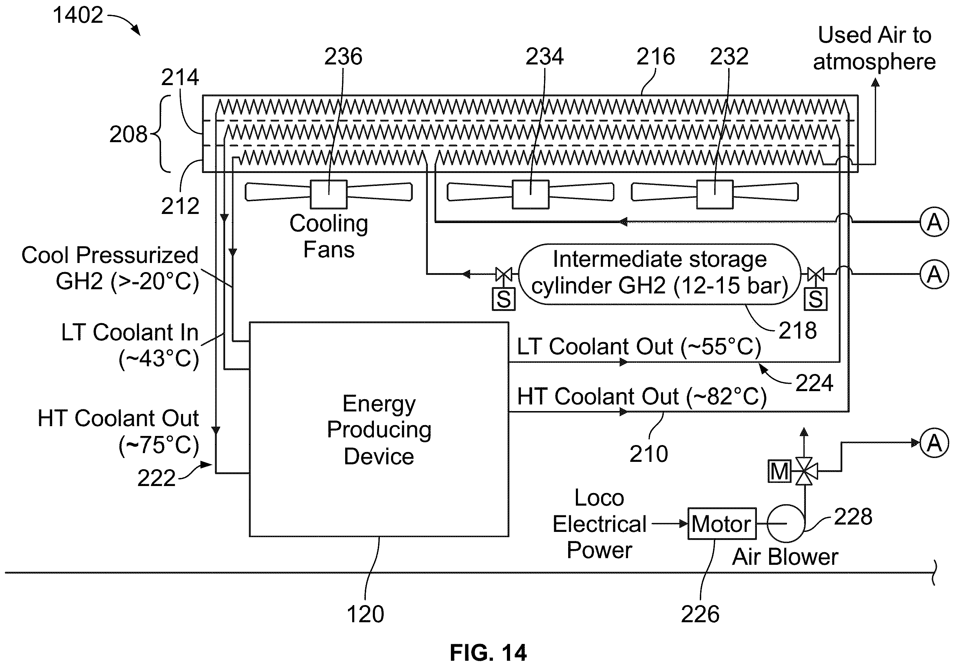

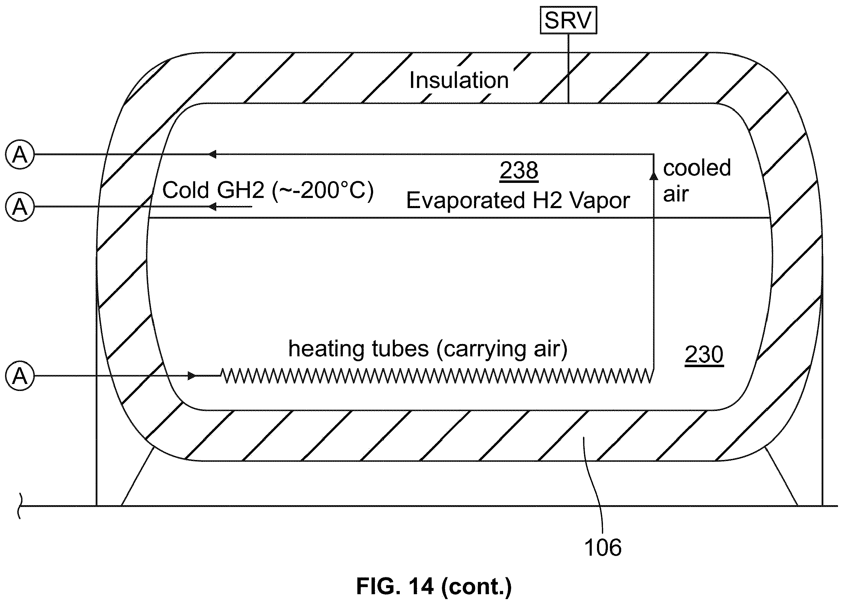

Figure 14 illustrates another example of a fuel supply system 1402. This supply system may include components of the fuel supply system 102 shown in Figure 2. In the fuel supply system 102 of Figure 1, the flow path of the gas or vapor fuel includes exiting the supply tank 106, flowing into and through the first, lower, or fuel heat exchanger, flowing into the intermediate tank, and then flowing into the energy producing assembly. In contrast, the fuel supply system 1402 of Figure 14 includes the gas or vapor fuel flowing out of the supply tank 106, flowing into the intermediate tank, then flowing into or through the first, lower, or fuel heat exchanger, then flowing into the energy producing assembly.

The intermediate tank can operate as a buffer to damp out variations in pressure of the gas or vapor fuel coming from the supply tank. This also can improve the control of pressure inside the supply tank by avoiding or reducing a need for a rapid heating in the event of a sudden spurt in demand for fuel from the energy producing assembly. This also can be helpful in lower temperature ambient conditions, where heating of the gas or vapor fuel from the supply tank may take longer. Passing the air discharged from the supply tank through the LT and HT heat exchangers can improve the LMTD of the heat exchangers and may allow for smaller heat exchangers to be used. Cooled gas or vapor fuel from the supply tank also may be directed into or through the LT and HT heat exchangers to cool air from the blowers or fans, also allowing for these heat exchangers to be smaller and assisting in heating the gas or vapor fuel to an acceptable temperature range as needed by the energy producing assemblies.

While different examples of fuel supply systems are shown and described herein, two or more (or all) of the fuel supply systems may be included in the same fuel supply system. For example, the different arrangements of conduits, heat exchangers, fans, blowers, pumps, intermediate tanks, reformers, evaporator devices, energy producing assemblies, and the like, that are shown in the different Figures may be combined into a single fuel supply system or a powered system formed from multiple vehicles may include the different variations of the fuel supply system on the same powered system.

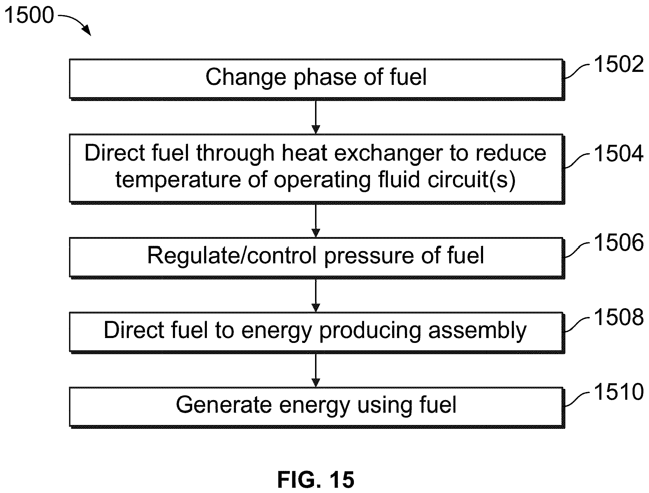

Figure 15 illustrates a flowchart of one example of a method 1500 for operating or controlling a fuel supply system. The method may be used to control or operate one or more, or each, of the fuel supply systems described herein. At step 1502, a phase of fuel may be changed. For example, liquid fuel in a supply tank may be heated or warmed to transition the phase of the liquid fuel to the vapor or gas phase. At step 1504, the gas or vapor phase fuel exits the supply tank and may be directed into a fuel heat exchanger. The gas or vapor phase fuel may be used to cool operating fluids flowing in operating fluid circuits that pass through an energy producing assembly. At step 1506, the gas or vapor fuel exits the fuel heat exchanger and may flow into an intermediate storage tank for pressure regulation and control. At step 1508, the gas or vapor fuel may pass from the intermediate storage tank to an energy producing assembly. At step 1510, the gas or vapor fuel is consumed by the energy producing assembly to generate mechanical energy and/or electric energy. For example, the energy producing assembly may effect a transformation or reduction of the fuel to a different state or thing, specifically electric potential or electric current. This energy may be used to power one or more loads, such as motors to propel a vehicle, to charge batteries to power the motors of the vehicle, to power motors or pumps to continue operation of the fuel supply system, or the like. As described above, one or more variations of the fuel supply system may involve changes to this method. The changes in operation are described above in connection with Figures 1 through 14.

In one example, a fuel supply system is provided that may include a fuel supply that can hold a fuel in a liquid phase, an energy producing assembly that may generate mechanical energy and/or electric energy by consuming the fuel from the fuel supply, one or more operating fluid circuits coupled with the energy producing assembly and that can manage an operating temperature of the energy producing assembly by directing operating fluid into and out of the energy producing assembly, and one or more heat exchangers that may control an operating fluid temperature of the operating fluid in the one or more operating fluid circuits using a reduced temperature of the fuel from the fuel supply prior to directing the fuel into the energy producing assembly.

The system may include a blower that can change the fuel from the liquid phase to a gas or vapor phase in the fuel supply by directing ambient air through one or more conduits extending into the fuel supply. The system may include an intermediate tank that can be disposed between the fuel supply and the energy producing assembly. The intermediate tank may control or maintain a pressure at which the fuel is delivered to the energy producing assembly.

The heat exchanger(s) may include a first heat exchanger and at least a second heat exchanger. The first heat exchanger can receive the fuel from the fuel supply in a gas or vapor phase and to direct the fuel toward the energy producing assembly. The second heat exchanger may receive the operating fluid from the one or more operating fluid circuits and direct the operating fluid back into the one or more operating fluid circuits. The system may include one or more blowers that can move air across the first heat exchanger and the at least the second heat exchanger to transfer thermal energy from the operating fluid in the at least the second heat exchanger to the fuel in the first heat exchanger.

The energy producing assembly may include one or more fuel cells. The fuel supply may hold a fuel in a liquid phase. The energy producing assembly, the one or more operating fluid circuits, and the one or more heat exchangers may be disposed onboard a vehicle system. The vehicle system may be a single vehicle.

The fuel supply may be a first fuel supply, and the vehicle system may include a first vehicle and a second vehicle with the fuel supply, the energy producing assembly, the one or more operating fluid circuits, and the one or more heat exchangers disposed onboard the first vehicle. The fuel supply system may include a second fuel supply that can hold an additional amount of the fuel and that can be disposed onboard the second vehicle.

A method for converting a fuel into mechanical energy and/or electric energy also is provided. One example of this method may include changing a phase of fuel held in a fuel supply in a liquid phase to a gas or vapor phase, directing the fuel in the gas or vapor phase through one or more heat exchangers, cooling an operating temperature of an operating fluid flowing in one or more operating fluid circuits using the fuel in the gas or vapor phase and the one or more heat exchangers, and generating mechanical energy and/or electric energy using an energy producing assembly by directing the fuel in the gas or vapor phase from the one or more heat exchangers to the energy producing assembly.

The phase of the fuel may be changed from the liquid phase to the gas or vapor phase in the fuel supply by directing ambient air through one or more conduits extending into the fuel supply. The method also may include controlling or maintaining a pressure at which the fuel is delivered to the energy producing assembly by temporarily storing the fuel in the gas or vapor phase in an intermediate tank disposed between the fuel supply and the energy producing assembly. The method may include powering one or more loads of a vehicle system using the mechanical energy and/or electric energy.

Another example of a fuel supply system may include a fuel supply that can hold a cryogenic fuel in a liquid phase, a blower that can change the fuel from the liquid phase to a gas or vapor phase in the fuel supply by directing ambient air through one or more conduits extending into the fuel supply, an energy producing assembly that may generate mechanical energy and/or electric energy by consuming the fuel from the fuel supply while the fuel is in the gas or vapor phase, one or more operating fluid circuits coupled with the energy producing assembly that can manage an operating temperature of the energy producing assembly by directing operating fluid into and out of the energy producing assembly, and one or more heat exchangers that may control an operating fluid temperature of the operating fluid in the one or more operating fluid circuits using a reduced temperature of the fuel in the gas or vapor phase prior to directing the fuel into the energy producing assembly.

The system also may include an intermediate tank that can be disposed between the fuel supply and the energy producing assembly. The intermediate tank may control or maintain a pressure at which the fuel is delivered to the energy producing assembly. The one or more heat exchangers may include a first heat exchanger and at least a second heat exchanger. The first heat exchanger can receive the fuel from the fuel supply in a gas or vapor phase and to direct the fuel toward the energy producing assembly. The second heat exchanger may receive the operating fluid from the one or more operating fluid circuits and direct the operating fluid back into the one or more operating fluid circuits.

The fuel supply system may include one or more blowers that can move air across the first heat exchanger and the at least the second heat exchanger to transfer thermal energy from the operating fluid in the at least the second heat exchanger to the fuel in the first heat exchanger. The energy producing assembly may include one or more fuel cells. The fuel supply may hold a fuel in a liquid phase, with the energy producing assembly, the one or more operating fluid circuits, and the one or more heat exchangers disposed onboard a vehicle system. The vehicle system may be a single vehicle or may be formed of multiple vehicles.

Use of phrases such as "one or more of ... and," "one or more of ... or," "at least one of ... and," and "at least one of ... or" are meant to encompass including only a single one of the items used in connection with the phrase, at least one of each one of the items used in connection with the phrase, or multiple ones of any or each of the items used in connection with the phrase. For example, "one or more of A, B, and C," "one or more of A, B, or C," "at least one of A, B, and C," and "at least one of A, B, or C" each can mean (1) at least one A, (2) at least one B, (3) at least one C, (4) at least one A and at least one B, (5) at least one A, at least one B, and at least one C, (6) at least one B and at least one C, or (7) at least one A and at least one C.

As used herein, an element or step recited in the singular and preceded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following claims, the terms "first," "second," and "third," etc. are used merely as labels, and do not impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function devoid of further structure.

This written description uses examples to disclose several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

### Clauses

Clause 1. A method for converting a fuel into mechanical energy and/or electric energy, the method comprising: changing a phase of fuel held in a fuel supply in a liquid phase to a gas or vapor phase; directing the fuel in the gas or vapor phase through one or more heat exchangers; cooling an operating temperature of an operating fluid flowing in one or more operating fluid circuits using the fuel in the gas or vapor phase and the one or more heat exchangers; and generating mechanical energy and/or electric energy using an energy producing assembly by directing the fuel in the gas or vapor phase from the one or more heat exchangers to the energy producing assembly.
Clause 2. The method of clause 1, wherein the phase of the fuel is changed from the liquid phase to the gas or vapor phase in the fuel supply by directing ambient air through one or more conduits extending into the fuel supply.
Clause 3. The method of clause 1, further comprising: controlling or maintaining a pressure at which the fuel is delivered to the energy producing assembly by temporarily storing the fuel in the gas or vapor phase in an intermediate tank disposed between the fuel supply and the energy producing assembly.
Clause 4. The method of clause 1, further comprising: powering one or more loads of a vehicle system using the mechanical energy and/or electric energy.
Clause 5. A fuel supply system, comprising: a fuel supply configured to hold a cryogenic fuel in a liquid phase; a blower configured to change the fuel from the liquid phase to a gas or vapor phase in the fuel supply by directing ambient air through one or more conduits extending into the fuel supply; an energy producing assembly configured to generate mechanical energy and/or electric energy by consuming the fuel from the fuel supply while the fuel is in the gas or vapor phase; one or more operating fluid circuits coupled with the energy producing assembly, the one or more operating fluid circuits configured to manage an operating temperature of the energy producing assembly by directing operating fluid into and out of the energy producing assembly; and one or more heat exchangers configured to control an operating fluid temperature of the operating fluid in the one or more operating fluid circuits using a reduced temperature of the fuel in the gas or vapor phase prior to directing the fuel into the energy producing assembly, wherein the fuel supply configured to hold a fuel in a liquid phase, the energy producing assembly, the one or more operating fluid circuits, and the one or more heat exchangers are configured to be disposed onboard a vehicle system, and wherein the vehicle system is a single vehicle.

## Claims

1. A fuel supply system (102; 302; 1402), comprising:
a fuel supply (106; 306) configured to hold a fuel in a liquid phase;
an energy producing assembly (120) configured to generate one or more of mechanical energy or electric energy by consuming the fuel from the fuel supply (106; 306);
one or more operating fluid circuits (222, 224) coupled with the energy producing assembly (120), the one or more operating fluid circuits (222, 224) configured to manage an operating temperature of the energy producing assembly (120) by directing operating fluid into and out of the energy producing assembly (120); and
one or more heat exchangers (212) configured to control an operating fluid temperature of the operating fluid in the one or more operating fluid circuits (222, 224) using a reduced temperature of the fuel from the fuel supply (106; 306) prior to directing the fuel into the energy producing assembly (120).

2. The fuel supply system (102; 302; 1402) of claim 1, further comprising:
a blower (228, 232, 234, 236) configured to change the fuel from the liquid phase to a gas or vapor phase in the fuel supply (106; 306) by directing ambient air through one or more conduits (210) extending into the fuel supply (106; 306).

3. The fuel supply system (102; 302; 1402) of claim 1, further comprising:
an intermediate tank (218) configured to be disposed between the fuel supply (106; 306) and the energy producing assembly (120), the intermediate tank (218) configured to control or maintain a pressure at which the fuel is delivered to the energy producing assembly (120).

4. The fuel supply system (102; 302; 1402) of claim 1, wherein the one or more heat exchangers (212) include a first heat exchanger (212) and at least a second heat exchanger (212), the first heat exchanger (212) configured to receive the fuel from the fuel supply (106; 306) in a gas or vapor phase and to direct the fuel toward the energy producing assembly (120), the at least the second heat exchanger (212) configured to receive the operating fluid from the one or more operating fluid circuits (222, 224) and direct the operating fluid back into the one or more operating fluid circuits (222, 224).

5. The fuel supply system (102; 302; 1402) of claim 4, further comprising:
one or more blowers (228, 232, 234, 236) configured to move air across the first heat exchanger (212) and the at least the second heat exchanger (212) to transfer thermal energy from the operating fluid in the at least the second heat exchanger (212) to the fuel in the first heat exchanger (212).

6. The fuel supply system (102; 302; 1402) of claim 1, wherein the energy producing assembly (120) includes one or more fuel cells.

7. The fuel supply system (102; 302; 1402) of claim 1, wherein the fuel supply (106; 306) configured to hold a fuel in a liquid phase, the energy producing assembly (120), the one or more operating fluid circuits (222, 224), and the one or more heat exchangers (212) are configured to be disposed onboard a vehicle system (100, 104; 300, 304).

8. The fuel supply system (102; 302; 1402) of claim 7, wherein the vehicle system (100, 104; 300, 304) is a single vehicle.

9. The fuel supply system (102; 302; 1402) of claim 7, wherein the fuel supply (106; 306) is a first fuel supply (106; 306), and the vehicle system (100, 104; 300, 304) includes a first vehicle and a second vehicle with the fuel supply (106; 306), the energy producing assembly (120), the one or more operating fluid circuits (222, 224), and the one or more heat exchangers (212) configured to be disposed onboard the first vehicle, and further comprising:
a second fuel supply (106; 306) configured to hold an additional amount of the fuel, the second fuel supply (106; 306) configured to be disposed onboard the second vehicle.

10. A fuel supply system (102; 302; 1402), comprising:
a fuel supply (106; 306) configured to hold a cryogenic fuel in a liquid phase;
a blower (228, 232, 234, 236) configured to change the fuel from the liquid phase to a gas or vapor phase in the fuel supply (106; 306) by directing ambient air through one or more conduits (210) extending into the fuel supply (106; 306);
an energy producing assembly (120) configured to generate one or more of mechanical energy or electric energy by consuming the fuel from the fuel supply (106; 306) while the fuel is in the gas or vapor phase;
one or more operating fluid circuits (222, 224) coupled with the energy producing assembly (120), the one or more operating fluid circuits (222, 224) configured to manage an operating temperature of the energy producing assembly (120) by directing operating fluid into and out of the energy producing assembly (120); and
one or more heat exchangers (212) configured to control an operating fluid temperature of the operating fluid in the one or more operating fluid circuits (222, 224) using a reduced temperature of the fuel in the gas or vapor phase prior to directing the fuel into the energy producing assembly (120).

11. The fuel supply system (102; 302; 1402) of claim 10, further comprising:
an intermediate tank (218) configured to be disposed between the fuel supply (106; 306) and the energy producing assembly (120), the intermediate tank (218) configured to control or maintain a pressure at which the fuel is delivered to the energy producing assembly (120).

12. The fuel supply system (102; 302; 1402) of claim 10, wherein the one or more heat exchangers (212) include a first heat exchanger (212) and at least a second heat exchanger (212), the first heat exchanger (212) configured to receive the fuel from the fuel supply (106; 306) in a gas or vapor phase and to direct the fuel toward the energy producing assembly (120), the at least the second heat exchanger (212) configured to receive the operating fluid from the one or more operating fluid circuits (222, 224) and direct the operating fluid back into the one or more operating fluid circuits (222, 224).

13. The fuel supply system (102; 302; 1402) of claim 12, further comprising:
one or more blowers (228, 232, 234, 236) configured to move air across the first heat exchanger (212) and the at least the second heat exchanger (212) to transfer thermal energy from the operating fluid in the at least the second heat exchanger (212) to the fuel in the first heat exchanger (212).

14. The fuel supply system (102; 302; 1402) of claim 10, wherein the energy producing assembly (120) includes one or more fuel cells.

15. The fuel supply system (102; 302; 1402) of claim 10, wherein the fuel supply (106; 306) configured to hold a fuel in a liquid phase, the energy producing assembly (120), the one or more operating fluid circuits (222, 224), and the one or more heat exchangers (212) are configured to be disposed onboard a vehicle system (100, 104; 300, 304).
